# EUROPÄISCHE PATENTSCHRIFT

(11) **EP 0 538 296 B1**
(45) Veröffentlichungstag und Bekanntmachung des Hinweises auf die Patenterteilung: **07.09.1994**
(21) Anmeldenummer: 91912108.7
(22) Anmeldetag: 22.06.1991
(51) Int. Cl.: F16K 3/08, F16K 27/04

(54) **OBERTEILKARTUSCHE FÜR EIN SANITÄRES EINZELABSPERRVENTIL**
UPPER CARTRIDGE FOR A SANITARY STOP COCK
CARTOUCHE POUR LA PARTIE SUPERIEURE D'UN ROBINET D'ARRET UNIQUE SANITAIRE

(30) Priorität: 06.07.1990 AT 1447/90
(43) Veröffentlichungstag der Anmeldung: 28.04.1993
(73) Patentinhaber: IDEAL-STANDARD GMBH, D-53008 Bonn (DE)
(72) Erfinder: BERGMANN, Konrad, D-5560 Wittlich (DE)
(74) Vertreter: Grabherr, Claudia, Dipl.Ing.
(86) Internationale Anmeldenummer: EP9101164
(87) Internationale Veröffentlichungsnummer: WO9201181

(56) Entgegenhaltungen:
- EP-A- 3 459
- US-A- 2 583 869
- US-A- 4 651 770
- US-A- 4 823 832

## Beschreibung

Die Erfindung betrifft eine Oberteilkartusche für ein sanitäres Einzelabsperrventil, bestehend aus einem Kopfstück, welches mittels eines O-Ringes abdichtbar ist, einer Spindel, einer beweglichen, zusammen mit der Spindel angetriebenen, Durchtritte begrenzenden Dichtscheibe, einer drehfest angeordneten, Durchtritte begrenzenden Dichtscheibe und einem Mitnehmerstift, der das Kopfstück, die feste Dichtscheibe und dann die bewegliche Dichtscheibe durchsetzt und am unteren Ende mit einem Mitnehmer verbunden ist, der in eine Ausnehmung der beweglichen Dichtscheibe eingreift, wobei die Begrenzung wenigstens eines Durchtrittes in den Dichtscheiben profiliert ist und einer der einander zugeordneten Durchtritte eine größere Fläche hat als der Durchtritt in der anderen Dichtscheibe.

Eine Oberteilkartusche, bei der sowohl die bewegliche Dichtscheibe als auch die feste Dichtscheibe geschlossene Durchtritte aufweisen, ist aus der AT-PS 390 311 bekannt. Diese Oberteilkartusche ist gegen Verunreinigung empfindlich und um diese Empfindlichkeit zu verringern, ist es z.B. aus der US-PS 4 823 832 bekannt, eine der beiden Dichtscheiben mit nach außen offenen, wellenförmigen Ausbrüchen zu versehen.

Aus verschiedenen Gründen ist es wünschenswert, daß das Öffnen des Ventils sanft erfolgt, d.h., daß es beim Öffnen zuerst zu einem stark gedrosselten Durchfluß kommt.

Aufgabe der vorliegenden Erfindung ist es daher, ein solches sanftes Öffnen durch die geeignete erfindungsgemäße Ausbildung einer Oberteilkartusche der anfangs erwähnten Art zu ermöglichen. Die Aufgabe wird dadurch gelöst, daß die Durchtritte in der einen Dichtscheibe eine geschlossene Begrenzung aufweisen, die durch zwei gekrümmte Abschnitte und zwei gerade, von innen nach außen verlaufende Abschnitte, die die gekrümmten Abschnitte verbinden, gebildet wird, daß die Durchtritte in der anderen Dichtscheibe radial nach außen offene Ausbrüche bilden, daß jeder dieser Ausbrüche mit zwei von innen nach außen verlaufenden, wellenförmigen Rändern ausgebildet ist, daß jeder Rand mindestens zwei Wellenscheitel aufweist, die für jeden Rand eine Scheitellinie definieren, und daß in der Berührungsebene der Dichtscheiben jede durch einen geraden, von innen nach außen verlaufenden Abschnitt der Begrenzung der Durchtritte (19) gelegte Linie mit den Scheitellinien der Durchtritte endliche Winkel einschließt.

Mit Hilfe der Erfindung läßt sich das genannte Problem lösen und es kann eine Feinregulierung des strömenden Wassers erreicht werden.

Die Erfindung wird nun anhand der Zeichnungen näher beschrieben. Fig. 1 zeigt eine Ausführungsform der Erfindung, die Fig. 2 ist eine Draufsicht auf die ortsfeste Dichtscheibe, Fig. 3 zeigt eine Draufsicht auf die bewegliche Dichtscheibe, Fig. 4 zeigt eine Stellung der beiden Dichtscheiben zueinander, bei der der Durchfluß gerade möglich wird.

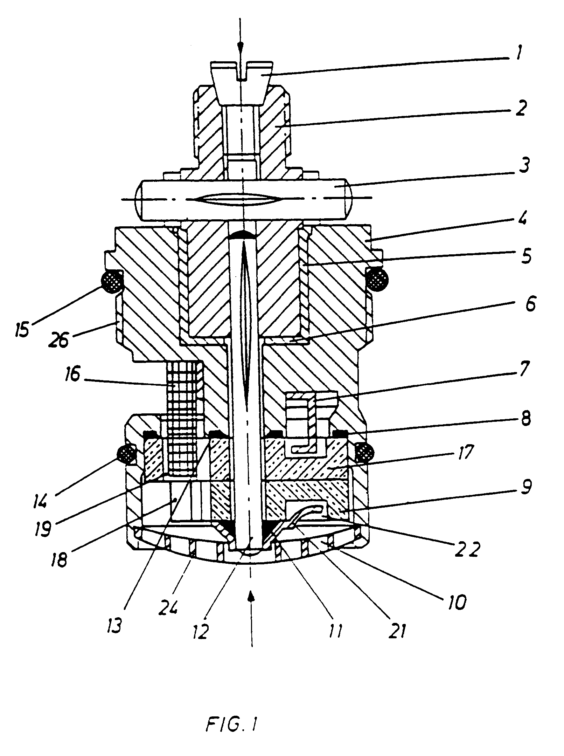

Fig.1 zeigt einen Schnitt durch eine zusammengesetzte Oberteilkartusche für ein sanitäres Einzelabsperrventil. Die Kartusche wird mittels des Gewindes 26 in einer Öffnung montiert und über die O-Ringe 14, 15 abgedichtet. Zur Steuerung des Wasserstromes sind Dichtscheiben 9 und 17 vorgesehen, die mit Öffnungen 18, 19 versehen sind. Es gibt eine Vielzahl derartigeer Dichtscheiben, die meist aus Al₂O₃ hergestellt werden und deren Oberfläche poliert ist, so daß die aufeinanderliegenden Flächen der beiden Dichtscheiben 9 und 17 eine einwandfreie Abdichtung gewährleisten. Oberhalb der beiden Dichtscheiben befindet sich das Kopfstück 4, an dem das Gewinde 26 vorgesehen ist. In das Kopfstück greift die Spindel 2, die wiederum über die Griffschraube 1 mit einem Betätigungshebel verbunden ist. Im vorliegenden Fall ist die Spindel 2 mit einem Mitnehmerstift 12 verpreßt, der die ortsfeste Dichtscheibe 17 und die bewegliche Dichtscheibe 9 durchsetzt und an seinem unteren Ende mit einem Mitnehmer 21 laserverschweißt ist. Dieser Mitnehmer greift in eine Vertiefung 22 der beweglichen Scheibe 9 ein, so daß bei einer Bewegung der Spindel 2 über den Mitnehmerstift 12 und den Mitnehmer 21 die Scheibe 9 verdreht wird. Je nach ihrer Stellung wird ein bestimmtes Wasservolumen durch die Öffnungen 18 und 19 hindurchtreten und zur Wasserentnahmestelle fließen können. Zur Geräuschdämpfung ist an der Austrittsöffnung aus den Dichtscheiben ein Gewebeeinsatz 16 oder ein Sieb angeordnet. Die Spindel 2 ist in einer Lagerbuchse 5 gelagert, die einen Boden 6 aufweist. Diese Lagerbuchse 5 besteht in vorteilhafter Weise aus Kunststoff, wodurch Korrosion und Verkalkung an der Spindel 2 verhindert werden. Die Stirnfläche des Kopfstückes 4 ist mit Dichtungen 8, 13 versehen, die dem Durchtritt des Mitnehmerstiftes 12 benachbart sind. Da auch der Raum am Ende des Mitnehmerstiftes zwischen Mitnehmerstift 12, Mitnehmer 21 und beweglicher Dichtscheibe 9 mit einem Dichtmaterial 11 ausgefüllt ist, kann kein Wasser entlang der Spindel 2 lecken, so daß also eine vollständige Dichtigkeit gegeben ist. Es befindet sich auch kein dynamisch belasteter O-Ring an der Spindel.

Das Paket mit den Scheiben 9, 17 wird mit Spiel nach oben und/oder unten angeordnet, d.h., das Scheibenpaket soll nicht eingeklemmt sein. Während der Montage der Kartusche wird ein Spiel, das zwischen 0,05 bis 0,1 mm betragen kann, in Abhängigkeit von den Unterschieden in der Dicke der Scheibenpaare eingestellt, wobei das Spiel durch Toleranzen bei Keramik gegeben ist. Das Scheibenpaar ist also längsaxial immer geringfügig verschieblich, wodurch die bewegliche Scheibe immer leichtgängig ist. Die Einstellung des Spaltes erfolgt über den unterschiedlich tief in die Spindel 2 einpreßbaren Mitnehmerstift 12, der also nicht mit einem Anschlag in der Spindel 2 zusammenwirkt.

Das untere Ende des Kopfstückes 4 ist glockenförmig ausgebildet und- umgreift die Dichtscheiben 9 und 17. Der glockenförmige Teil des Kopfstückes 4 wird durch ein Grobfilter 24 abgeschlossen, welches Schmutzpartikel zurückhält Zusätzlich verbindet noch eine Arretierung 7 das Kopfstück 4 mit der ortstfesten Dichtscheibe 17, wodurch eine weitere Sicherheit gegen ein Lecken gegeben ist. Als Endanschlag für den Drehbereich des Mitnehmerstiftes 12 ist ein Kerbstift 3 vorgesehen, der quer zur Vertikalachse der Oberteilkartusche eingesetzt ist.

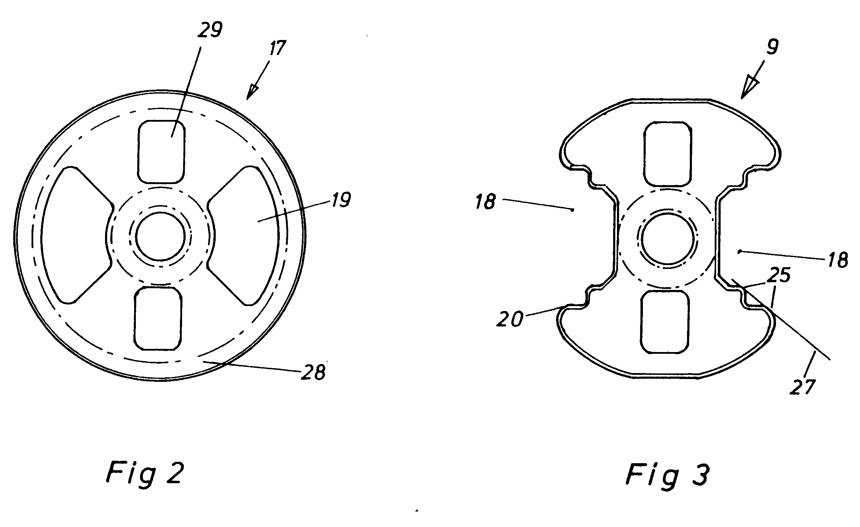

Fig. 2 zeigt eine Draufsicht auf die ortsfeste Dichtscheibe. Diese Scheibe 17 ist entsprechend des Standes der Technik, z.B. AT-PS 390 311, ausgebildeet und besitzt Durchtritte 19 sowie Ausnehmungen 29, in die eine Arretierung 7 eingreifen kann. Die Durchtritte 19 enden in einem Abstand vom Rand der Dichtscheibe 17, so daß an diesen Rand eine geschlossene Kreisfläche gebildet wird.

Fig. 3 zeigt die Ausformung der beweglichen Dichtscheibe. Die Durchtritte sind hier durch nach außen offene Durchbrüche 18 gebildet und der Rand 20 dieser Ausbrüche 18 ist wellenförmig ausgebildet. Bei dem hier gewähten Ausführungsbeispiel sind zwei Wellenscheitel 25 je Rand vorhanden. Es können allerdings auch mehr Scheitel ausgebildet sein. Die Scheitel 25 liegen auf einer Geraden 27, die in einer Ebene liegt, welche die Ebene durch den radialen Abschluß 28 der Durchtritte19 in der ortsfesten Scheibe 17 schneidet. Wie man aus der Fig. 3 entnehmen kann, werden die Radien der Wellenscheitel 25 in Richtung zur Mitte der Dichtscheibe 9 kleiner.

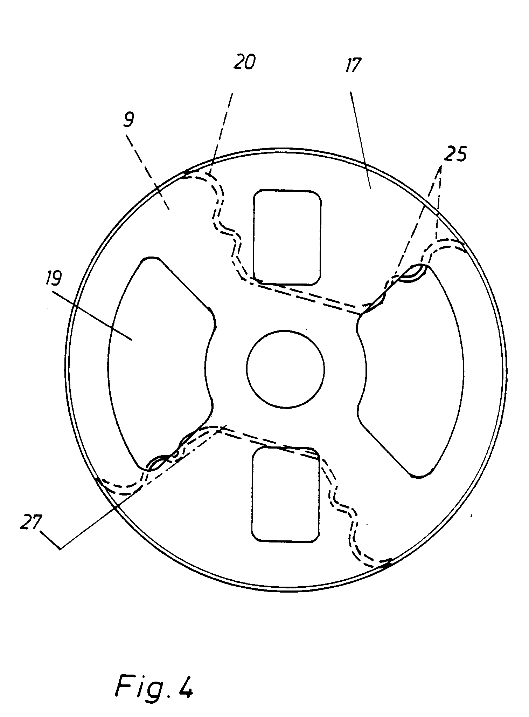

Betrachtet man jetzt die Fig.4, wo die bewegliche Dichtscheibe 9 gegenüber der festen Dichtscheibe 17 verdreht ist, so sieht man, daß der Scheitel 25 der Welle mit kleinerem Radius zuerst oberhalb des Durchtrittes 19 zu liegen kommt, d.h., es tritt zuerst ein sehr gedrosselter Durchfluß von Wasser durch die beiden Dichtscheiben auf und erst bei Weiterbewegung der beweglichen Dichtscheibe 9 wird die Durchflußfläche immer größer, bis schließlich eine vollkommene Öffnung gegeben ist. Durch die Drosselung kann das Wasser nur in geringer Menge zuerst durch die beiden Dichtflächen hinwegtreten, d.h. es erfolgt eine sanfte Öffnung des Ventiles. Wie man der Zeichnung auch entnehmen kann, befindet sich der Scheitel 25 mit größerem Radius, der nahe des Randes der Scheibe liegt, stets oberhalb der geschlossenen Kreisfläche der festen Dichtscheibe. Dadurch daß sich der Scheitel mit größerem Radius stets über einer vollen Fläche befindet, d.h., nie eine Durchtrittsfläche öffnet, bleibt die Dichtung zwischen den beiden Flächen stets erhalten und ein Lecken ist somit vermieden.

Die Ausbildung des Randes der Ausbrüche in der beweglichen Scheibe 9 muß nicht, wie dargestellt, stetig erfolgen, sondern es können auch Stufen vorgesehen sein. Aus fertigungstechnischen Gründen empfiehlt es sich, die Ränder anzufassen.

## Patentansprüche

1. Oberteilkartusche für ein sanitäres Einzelabsperrventil, bestehend aus einem Kopfstück (4), welches mittels eines O-Ringes (15) abdichtbar ist, einer Spindel (2), einer beweglichen, zusammen mit der Spindel (2) angetriebenen, Durchtritte (18) begrenzenden Dichtscheibe (9), einer drehfest angeordneten, Durchtritte (19) begrenzenden Dichtscheibe (17) und einem Mitnehmerstift (12), der das Kopfstück (4), die feste Dichtscheibe (17) und dann die bewegliche Dichtscheibe (9) durchsetzt und am unteren Ende mit einem Mitnehmer (21) verbunden ist, der in eine Ausnehmung (22) der beweglichen Dichtscheibe (9) eingreift, wobei die Begrenzung wenigstens eines Durchtrittes (18, 19) in den Dichtscheiben (9, 17) profiliert ist und einer der einander zugeordneten Durchtritte (18, 19) eine größe- re Fläche hat als der Durchtritt in der anderen Dichtscheibe,
dadurch gekennzeichnet,
- daß die Durchtritte (19) in der einen Dichtscheibe (17) eine geschlossene Begrenzung aufweisen, die durch zwei gekrümmte Abschnitte und zwei gerade, von innen nach außen verlaufende Abschnitte, die die gekrümmten Abschnitte verbinden, gebildet wird,
- daß die Durchtritte (18) in der anderen Dichtscheibe (9) radial nach außen offene Ausbrüche bilden, daß jeder dieser Ausbrüche mit zwei von innen nach außen verlaufenden, wellenförmigen Rändern (20) ausgebildet ist, daß jeder Rand (20) mindestens zwei Wellenscheitel (25) aufweist, die für jeden Rand (20) eine Scheitellinie (27) definieren, und
- daß in der Berührungsebene der Dichtscheiben (9, 17) jede durch einen geraden, von innen nach außen verlaufenden Abschnitt der Begrenzung der Durchtritte (19) gelegte Linie mit den Scheitellinien (27) der Durchtritte (18) endliche Winkel einschließt.

2. Oberteilkartusche nach Anspruch 1, dadurch gekennzeichnet, daß die Ränder (20) der nach außen offenen Durchbrüche (18) stufenförmig ausgebildet sind.

3. Oberteilkartusche nach Anspruch 1, dadurch gekennzeichnet, daß die Radien der Wellenscheitel (25) in Richtung zur Mitte der Dichtscheibe (9) abnehmen.

4. Oberteilkartusche nach einem der Ansprüche 2 oder 3, dadurch gekennzeichnet, daß der Wellenscheitel (25) nahe des äußeren Randes der Dichtscheibe (9) ständig der anderen Dichtscheibe (17) außerhalb des Durchtrittes (19) gegenüberliegt.

## Claims

1. An upper cartridge for a sanitary stop cock, consisting of a headpiece (4), sealable by means of an O-ring (15), a spindle (2), a movable sealing disc (9) which defines apertures (18) and is driven together with the spindle (2), a sealing disc (17) which is disposed to be relatively non-rotatable and defines apertures (19), and a driver pin (12) which extends through the headpiece (4), the fixed sealing disc (17) and then the movable sealing disc (9) and is connected at the bottom end to a driver (21) which engages in a recess (22) in the movable sealing disc (9), the boundaries of at least one aperture (18, 19) in the sealing discs (9, 17) being profiled and one of the facing apertures (18, 19) having a larger area than the aperture in the other sealing disc, characterised in that
- the apertures (19) in one sealing disc (17) have a closed bondary formed by two curved portions and two straight portions which connect the curved portions and which extend outwardly from within,
- in that the apertures (18) in the other sealing disc (9) form openings which are open radially outwards, in that each of these openings is formed with two corrugated edges (20) extending outwardly from within, in that each (20) comprises at least two corrugation crests (25) which define a crest line (27) for each edge (20), and
- in that in the plane of contact of the sealing discs (9, 17) each line passing through a straight portion of the boundary of the apertures (19) extending outwardly from within includes finite angles with the crest lines (27) of the apertures (18).

2. An upper cartridge according to claim 1,
characterised in that the edges (20) of the outwardly open openings (18) are stepped.

3. An upper cartridge according to claim 1,
characterised in that the radii of the corrugation crests (25) decrease towards the centre of the sealing disc (9).

4. An upper cartridge according to claim 2 or 3,
characterised in that the corrugation crest (25) near the outer edge of the sealing disc (9) is always situated opposite the other sealing disc (17) outside the aperture (19).

## Revendications

1. Cartouche supérieure d'un robinet d'arrêt unique à usage sanitaire, constitué d'une pièce de tête (4), qui peut être étanchée a l'aide d'un joint torique (15), d'une tige (2), d'une rondelle d'étanchéité (9), mobile, entraî- née en même temps que la tige (2) et délimitant des ouvertures (18), d'une rondelle d'étanchéité (17), fixée en rotation et délimitant des ouvertures (19), et d'une broche d'entraînement (12), qui traverse la pièce de tête (4), la rondelle d'étanchéité fixe (17) puis la rondelle d'étanchéité mobile (9) et, en son extrémité inférieure, est reliée à un tenon d'entraînement (21), qui entre en prise dans un évidement (22) aménagé dans la rondelle d'étanchéité mobile (9), la délimitation d'au moins une ouverture (18, 19) aménagée dans les rondelles d'étanchéité (9, 17) étant profilée, et l'une des ouvertures (18, 19) en regard l'une de l'autre a une aire plus grande que l'ouverture aménagée dans l'autre rondelle d'étanchéité, caractérisée en ce que :
- les ouvertures (19) aménagées dans l'une des rondelles d'étanchéité (17) ont une délimitation fermée, qui est formée de deux segments incurvés et de deux segments rectilignes, courant de l'intérieur vers l'extérieur, et qui relient entre eux les segments incurvés ;
- les ouvertures (18) aménagées dans l'autre rondelle d'étanchéité (19) forment des creux, ouverts radialement vers l'extérieur ; chacun de ces creux est formé de deux bords ondulés (20), courant de l'intérieur vers l'extérieur ; chaque bord (20) comporte au moins deux crêtes d'ondulation (25), qui pour chaque bord (20) définissent une ligne de crête (27), et
- dans le plan de contact des rondelles d'étanchéité (9, 17), chaque ligne passant par un segment rectiligne, courant de l'intérieur vers l'extérieur, de la délimitation des ouvertures (19), forme un angle fini avec les lignes de crête (27) des creux (18).

2. Cartouche supérieure selon la revendication 1, caractérisée en ce que les bords des creux (18), ouverts vers l'extérieur, sont conçus d'une manière étagée.

3. Cartouche supérieure selon la revendication 1, caractérisée en ce que les rayons des crêtes (25) des ondulations diminuent vers le milieu de la rondelle d'étanchéité (9).

4. Cartouche supérieure selon l'une des revendications 2 ou 3, caractérisée en ce que la crête d'ondulation (25) est en permanence, au voisinage du bord extérieur de la rondelle d'étanchéité (9), opposée à l'autre rondelle d'étanchéité (17) à l'extérieur de l'ouverture (19).
